# EUROPEAN PATENT APPLICATION

(11) **EP 4 497 623 A2**
(43) Date of publication of application: **29.01.2025**
(21) Application number: 24187223.3
(22) Date of filing: 08.07.2024
(51) Int. Cl.: B60L 1/00, B60L 15/20

(54) **ELECTRIC WORK VEHICLE AND WORK VEHICLE**

(30) Priority: 10.07.2023 JP 2023112917; 10.07.2023 JP 2023112918
(71) Applicant: Kubota Corporation, Osaka-shi, Osaka 556-8601 (JP)
(72) Inventor: NAKATSU, Ryotaro, SAKAI-SHI, OSAKA, 5900823 (JP); ONO, Kohei, SAKAI-SHI, OSAKA, 5900823 (JP); YAMAMOTO, Takumi, SAKAI-SHI, OSAKA, 5900823 (JP)
(74) Representative: Cabinet Beau de Loménie

(57) **Abstract**

An electric work vehicle includes: a battery; a motor that generates motive power by receiving supply of electric power from the battery; a traveling device operated by the motive power; a work power output portion that outputs the motive power to be supplied to a working device for performing work; a travel transmission system (41) that transmits the motive power from the motor to the traveling device; a work transmission system (42) that transmits the motive power from the motor to the work power output portion; a state detection unit (52) that detects a state of work travel; and a transmission control unit (54) that controls the transmission states of the travel transmission system and the work transmission system. In response to the state detection unit detecting that the work travel is in a predetermined low work travel state, the transmission control unit performs power conservation control for reducing the electric power consumed by the motor.

## Description

### BACKGROUND OF THE INVENTION

### 1. Field of the Invention

The present invention relates to an electric work vehicle in which a traveling device and a working device are driven by motive power generated by a motor. The present invention also relates to a work vehicle that includes a prime mover that receives a supply of energy and generates motive power, and in which a traveling device and a working device are driven by the motive power generated by the prime mover.

### 2. Description of the Related Art

As disclosed in JP 2021-099086A, a work machine (work vehicle, electric work vehicle) includes a battery unit (battery) and an electric motor (motor) driven by electric power stored in the battery unit. The work machine also includes a traveling device that allows a body to travel, and a working device that performs a predetermined task can be attached thereto or detached therefrom. The traveling device and the working device are driven using motive power generated by an electric motor as motive power.

### SUMMARY OF THE INVENTION

In order to achieve the above-described object, an electric work vehicle according to an embodiment of the present invention includes: a battery; a motor configured to generate motive power by receiving supply of electric power from the battery; a traveling device configured to operate by the motive power; a work power output portion configured to output the motive power to be supplied to a working device configured to perform work; a travel transmission system configured to transmit the motive power from the motor to the traveling device; a work transmission system configured to transmit the motive power from the motor to the work power output portion; a state detection unit configured to detect a state of work travel; and a transmission control unit configured to control transmission states of the travel transmission system and the work transmission system, in which in response to the state detection unit detecting that the work travel is in a predetermined low work travel state, the transmission control unit performs power conservation control for reducing the electric power consumed by the motor.

In a common electric work vehicle, the motor operates at a predetermined rotation speed even when traveling at low speed, and the motor continues to operate at the predetermined rotation speed even when the operation of the working device is reduced or stopped.

According to the above configuration, in a low work travel state in which travel or work is reduced, power conservation control for reducing the power consumption of the motor is performed. As a result, a case is suppressed in which the motor operates more than necessary and more electric power (energy) is consumed than necessary, and thus it is possible to consume energy efficiently.

Also, in the power conservation control, the transmission control unit may reduce the motive power generated by the motor.

With this configuration, the motive power generated by the motor is reduced, and therefore electric power (energy) consumption can be suppressed with greater precision and energy can be consumed more efficiently.

Also, the motive power generated by the motor may be output via a propeller shaft configured to rotate according to the motive power, and in the power conservation control, the transmission control unit may reduce a rotation speed of the propeller shaft.

With this configuration, the rotation speed of the propeller shaft that transmits rotational motive power to the traveling device and the working device is reduced, and therefore the motive power transmitted to the traveling device and the working device is suppressed with high precision. As a result, the load on the motor is reduced, the electric power (energy) consumed by the motor can be suppressed with high precision, and energy can be consumed efficiently.

Also, the transmission control unit may stop transmission of the motive power by the work transmission system upon elapse of a predetermined first time period after the motive power is reduced.

With this configuration, the motive power is not transmitted to the working device, and therefore the load on the motor is reduced and the electric power (energy) consumed by the motor can be suppressed with greater precision. As a result, energy can be consumed efficiently.

Also, in the power conservation control, the transmission control unit may stop transmission of the motive power by the work transmission system.

With this configuration, motive power is not transmitted to the working device, and therefore the load on the motor is reduced and the electric power (energy) consumed by the motor can be suppressed with greater precision. As a result, energy can be consumed efficiently.

Also, the transmission control unit may stop transmission of the motive power by the work transmission system by stopping output of the motive power from the work power output portion.

With this configuration, the motive power is not transmitted to the working device, and therefore the load on the motor is reduced and the electric power (energy) consumed by the motor can be suppressed with greater precision. As a result, energy can be consumed efficiently.

Also, the low work travel state may be a state in which transmission of the motive power to the traveling device in the travel transmission system is stopped.

A state in which transmission of the motive power to the traveling device has stopped and travel is not being performed is a state in which no work travel is being performed or work is being performed while the body is stopped. At the very least, since travel is not being performed, there is a reduced need for the motive power output from the motor.

With the above configuration, by performing power conservation control in a travel stopped state in which the need for the motive power output from the motor is reduced, the electric power (energy) consumed by the motor can be suppressed, and energy can be consumed efficiently.

Also, the travel transmission system may include a continuously variable transmission configured to change a speed of the motive power, the electric work vehicle may further include a travel operation tool configured to receive an operation on the continuously variable transmission, and the low work travel state may be a state in which the travel operation tool has been operated to a position of operating the continuously variable transmission to a neutral position.

The state in which the continuously variable transmission is operated to the neutral position is a state in which traveling is not being performed. With the above-described configuration, by performing power conservation control in a travel stopped state in which the need for motive power output from the motor is reduced, the electric power (energy) consumed by the motor can be suppressed, and energy can be consumed efficiently.

Also, the travel transmission system may include a continuously variable transmission configured to change a speed of the motive power, and the low work travel state may be a state in which the continuously variable transmission is at a neutral position.

The state in which the continuously variable transmission is at the neutral position is a state in which travel is not being performed. With the above configuration, by performing power conservation control in a travel stopped state in which the need for motive power output from the motor is reduced, the electric power (energy) consumed by the motor can be suppressed, and energy can be consumed efficiently.

Also, the electric work vehicle may further include a work operation tool configured to receive an operation on the working device, and the low work travel state may be a state in which the work operation tool has not been operated for a predetermined second time period or longer.

A state in which the work operation tool has not been operated for a predetermined time period (second time period) or longer is highly likely to be a state in which no work is being performed. During a work stopped state in which no work is being performed, the need for the motive power output from the motor is reduced.

With the above configuration, by performing power conservation control during a work stopped state in which the need for motive power output from the motor is reduced, the electric power (energy) consumed by the motor can be suppressed, and energy can be consumed efficiently.

Also, the working device may be attachable to and detachable from the work power output portion, the electric work vehicle may further include a sensor configured to detect whether or not the working device is attached to the work power output portion, and the transmission control unit may stop the power conservation control in response to the sensor detecting that the working device is attached to the work power output portion.

Even if travel has stopped and the electric work vehicle is in a low work travel state, work continues while the body is stationary in some cases. In such a case, if the electric power consumed by the motor is reduced, the motive power transmitted to the working device will be insufficient and the work cannot be performed suitably in some cases.

According to the above configuration, in a state where no work is being performed, if the electric work vehicle is in a low work travel state, power conservation control is performed to suppress the electric power (energy) consumed by the motor, and in a state where there is a possibility that work will continue, power conservation control is not performed, and therefore sufficient motive power for performing appropriate work as necessary can be ensured.

Also, the motor may include a traveling motor configured to drive the traveling device and a working motor configured to drive the working device, and the transmission control unit may reduce the motive power generated by at least one of the traveling motor and the working motor.

With this configuration, even in an electric work vehicle including a plurality of motors, a case is suppressed in which the motors operate when not needed and consume more electric power (energy) than necessary, and therefore it is possible to consume energy efficiently.

In order to achieve the above object, a work vehicle according to one embodiment of the present invention includes: an energy storage portion configured to store energy; a prime mover configured to generate motive power by receiving supply of the energy; a traveling device configured to operate by the motive power; a work power output portion configured to output the motive power to be supplied to a working device configured to perform work; a travel transmission system configured to transmit the motive power from the prime mover to the traveling device; a work transmission system configured to transmit the motive power from the prime mover to the work power output portion; a remaining amount detection unit configured to detect a remaining amount of the energy stored in the energy storage unit; and a transmission control unit configured to control transmission states of the travel transmission system and the work transmission system, in which the transmission control unit performs conservation control for stopping output of the motive power from the work power output portion in response to the remaining amount detection unit detecting that the remaining amount is less than or equal to a predetermined reference remaining amount.

In response to the stored energy running out, the work machine cannot perform even travel, not to mention work. Generally, energy is resupplied at a predetermined location, but if energy runs out during work travel, it is not possible to move to a resupplying location to resupply energy.

According to the above configuration, in response to the remaining amount of stored energy becoming low, the output of motive power from the work power output portion is stopped before travel becomes impossible. For this reason, motive power is no longer supplied to the working device, making it impossible to perform work. In this case as well, motive power is supplied to the traveling device, and therefore it is possible to move to a resupplying location to receive a resupply of energy. Also, since no motive power is supplied to the working device, all of the motive power is supplied to the traveling device, and the prime mover operates efficiently. As a result, the prime mover can operate efficiently and energy can be consumed efficiently.

Also, the transmission control unit may stop output of the motive power from the work power output portion by stopping transmission of the motive power by the work transmission system.

With this configuration, the motive power is not transmitted to the working device, and therefore the load on the prime mover is reduced, and thus the motor can operate more efficiently and the prime mover can consume energy more efficiently.

Furthermore, a work vehicle according to an embodiment of the present invention includes: an energy storage portion configured to store energy; a prime mover configured to generate motive power by receiving supply of the energy; a traveling device configured to operate by the motive power; a work power output portion configured to output the motive power to be supplied to a working device configured to perform work; a travel transmission system configured to transmit the motive power from the prime mover to the traveling device; a work transmission system configured to transmit the motive power from the prime mover to the work power output portion; a remaining amount detection unit configured to detect a remaining amount of the energy stored in the energy storage unit; and a transmission control unit configured to control transmission states of the travel transmission system and the work transmission system, in which the travel transmission system includes a continuously variable transmission configured to change a speed of the motive power input to a hydraulic pump and output the resulting motive power from a hydraulic motor, and the transmission control unit performs conservation control for reducing the motive power input to the hydraulic pump in response to the remaining amount detection unit detecting that the remaining amount is less than or equal to a predetermined reference remaining amount.

The greater the input motive power of the hydraulic pump, the greater the loss that occurs in the output motive power.

According to the above configuration, the motive power input to the hydraulic pump is reduced, and therefore the loss that occurs in the hydraulic pump is reduced. As a result, the prime mover can operate efficiently, and the prime mover can consume energy more efficiently.

Also, the motive power may be transmitted to the hydraulic pump as rotational motive power of a propeller shaft, the propeller shaft may include a gear shift device, and the transmission control unit may reduce the motive power input to the hydraulic pump by reducing a rotation speed of the propeller shaft using the gear shift device.

With this configuration, the motive power input to the hydraulic pump can be reduced with high precision, and therefore the prime mover can operate efficiently and the prime mover can consume energy more efficiently.

Also, the work vehicle may further include a notification unit configured to issue a predetermined notification, and in response to performing the conservation control, the transmission control unit may cause the notification unit to issue the notification indicating that the conservation control is to be performed.

With this configuration, the worker receives notification and is able to recognize in advance that conservation control is to be performed. For this reason, the worker can prepare an appropriate response in advance, including determining whether or not conservation control is necessary. As a result, the prime mover can be operated efficiently, and the prime mover can consume energy more efficiently.

Also, the work vehicle may further include a conservation operation tool configured to receive an operation indicating whether or not execution of the conservation control is needed, and the transmission control unit may execute the conservation control in response to receiving an operation requesting execution of the conservation control on the conservation operation tool after the notification indicating that the conservation control is to be performed is issued.

With this configuration, a worker who recognizes that conservation control is to be performed can determine whether or not it is appropriate to perform conservation control, and can perform an operation such that conservation control is performed only when necessary. As a result, the prime mover can be operated efficiently, and the prime mover can consume energy more efficiently.

Also, the prime mover may be a motor, the energy may be electric power, and the energy storage unit may be a battery.

With this configuration, the motor, which is the prime mover, can be operated efficiently, and the motor can consume electric power more efficiently.

Also, the prime mover may be an engine and the energy may be fuel.

With this configuration, the engine, which is the prime mover, can be operated efficiently, and the engine can consume fuel more efficiently.

### BRIEF DESCRIPTION OF THE DRAWINGS

FIG. 1 is a left side view of a tractor.
FIG. 2 is a vertical cross-sectional left side view showing an arrangement of a battery, a motor, and the like.
FIG. 3 is a diagram showing a flow of motive power transmission.
FIG. 4 is a diagram illustrating a configuration for executing power conservation control according to a first embodiment.
FIG. 5 is a diagram illustrating a processing flow of power conservation control according to the first embodiment.
FIG. 6 is a diagram illustrating a configuration for executing power conservation control according to a second embodiment.
FIG. 7 is a diagram illustrating a processing flow of power conservation control according to the second embodiment.

### DETAILED DESCRIPTION OF PREFERRED EMBODIMENTS

### First Embodiment

Hereinafter, a work vehicle (electric work vehicle) will be described using a tractor as an example. In the following diagrams, F indicates the frontward direction, B indicates the rearward direction, U indicates the upward direction, D indicates the downward direction, F indicates the frontward direction, which is the forward direction, and B indicates the rearward direction.

### Overall Configuration of Tractor

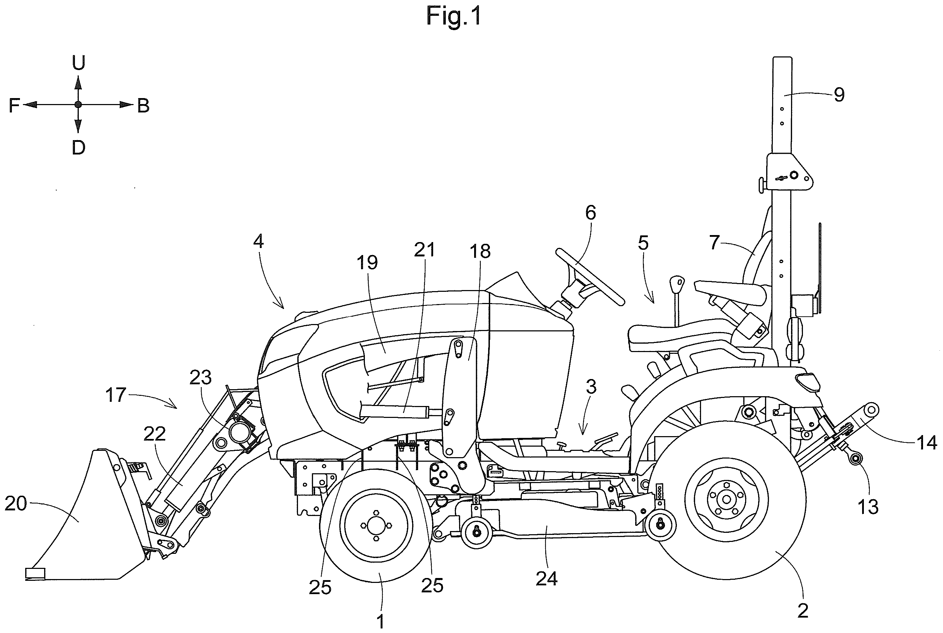

As shown in FIG. 1, a body 3 includes right and left front wheels 1 (corresponding to a traveling device) and right and left rear wheels 2 (corresponding to a traveling device). The tractor has a hood 4 at the front portion of the body 3 and a driving section 5 at the rear portion of the body 3. The driving section 5 has a steering wheel 6 for steering the front wheels 1, a driver's seat 7, and a ROPS frame 9.

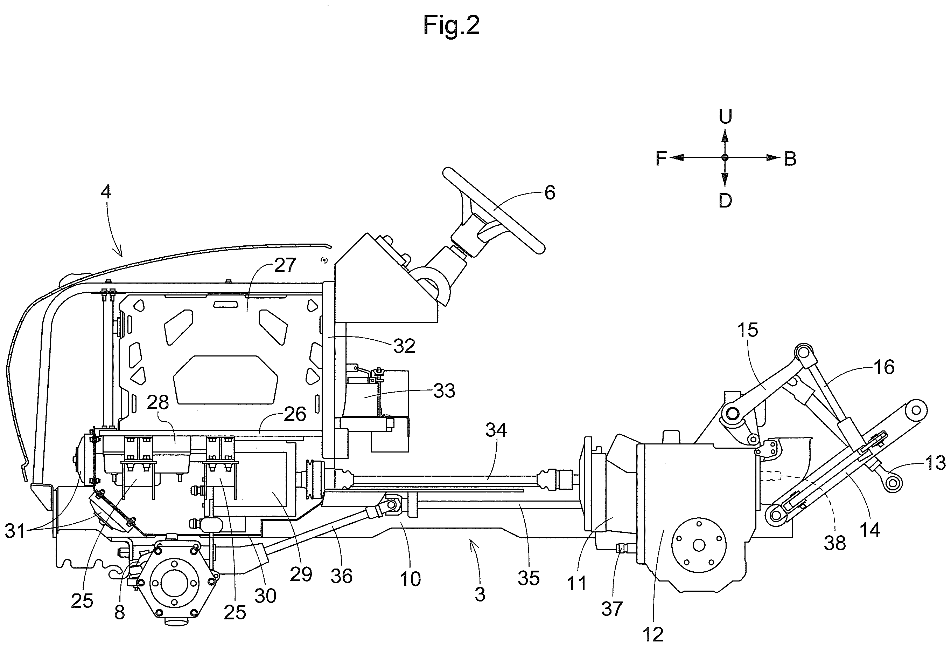

As shown in FIGS. 1 and 2, the body 3 has right and left body frames 10, a continuously variable transmission 11, a transmission case 12, and the like. The continuously variable transmission 11 is coupled to the front portion of the transmission case 12. The body frames 10 are provided along the front-rear direction, and the continuously variable transmission 11 and the transmission case 12 are coupled thereto. The front wheels 1 are attached to a front axle case 8 supported at the front portion of the body frames 10. The rear wheels 2 are attached to the transmission case 12.

The transmission case 12 supports, at the rear portion, one top link 13 and right and left lower links 14 so as to be swingable up and down. Right and left lift arms 15 are supported at the rear portion of the transmission case 12. Rods 16 are connected across the lift arms 15 and the lower links 14.

Various types of working devices (not shown) are attachable to the top link 13 and the lower links 14. The working device is raised and lowered via the top link 13 and the lower links 14 by swinging the lift arms 15 up and down.

### Configuration of Front Loader

As shown in FIG. 1, the tractor includes a front loader 17 (corresponding to a working device) at the front portion of the body 3. The front loader 17 has base portions 18, booms 19, a bucket 20, boom cylinders 21, a bucket cylinder 22, a frame 23, and the like.

The right and left base portions 18 are connected to the body frame 10, extend upward, and are arranged on the right and left sides of the rear portion of the hood 4. The right and left booms 19 are attached to the upper part of the base portion 18 so as to be able to swing up and down, and extend frontward. The right and left boom cylinders 21 are attached across the base portion 18 and the booms 19, and the boom cylinders 21 raise and lower the booms 19.

The bucket 20 is attached to the front portions of the booms 19 so as to be able to swing up and down. The frame 23 is connected across the right and left booms 19. The bucket cylinder 22 is connected across the bucket 20 and the frame 23, and the bucket 20 is subjected to a scooping operation and a dumping operation by the bucket cylinder 22.

### Configuration of Mower

As shown in FIG. 1, a mower 24 (corresponding to a working device) can be attached to and detached from the body frame 10 of the tractor. The mower 24 is disposed between the front wheels 1 and the rear wheels 2, and is capable of being raised and lowered relative to the body frame 10.

The mower 24 includes three blades (not shown) that are driven to rotate about a vertical axis. The three blades are arranged inside the mower 24 so as to be arranged side by side in the left-right direction.

### Configuration of Front Portion of Body

As shown in FIG. 2, the tractor includes a battery 27, an inverter 28, and a motor 29 (corresponding to a prime mover), a battery 33 (corresponding to an energy storage portion), and the like, at the front portion of the body frame 10.

Right and left support members 25 are connected to the front portion of the body frame 10, and a flat support frame 26 is connected to the support members 25. The battery 27 is provided inside the hood 4 and is supported on the upper surface of the support frame 26.

The inverter 28 is attached to the front portion of the lower surface of the support frame 26. The motor 29 is attached to the rear portion of the lower surface of the support frame 26 and is disposed between the right and left body frames 10.

The inverter 28 and the motor 29 are covered from below by a lower cover 30. The lower cover 30 has a fan 31 at its front portion. The fan 31 introduces outside air into the inside of the lower cover 30, and the inverter 28 and the motor 29 are cooled by the outside air.

An arch-shaped frame 32 is connected across the right and left body frames 10 and is arranged at the rear end of the hood 4. A 12-V battery 33 is supported on the frame 32.

The battery 27 supplies electric power to the inverter 28. The inverter 28 converts the DC power of the battery 27 into AC power and supplies the AC power to the motor 29. The motor 29 operates by receiving the AC power from the inverter 28.

The battery 27 supplies electric power to a DC-DC converter (not shown) and the DC-DC converter steps down the voltage of the supplied electric power to 12 V The DC-DC converter supplies the electric power stepped down to 12 V to the battery 33. Various devices (not shown) equipped on the tractor are operated by the 12-V electric power from the battery 33.

### Configuration of Transmission System to Front and Rear Wheels and Mower

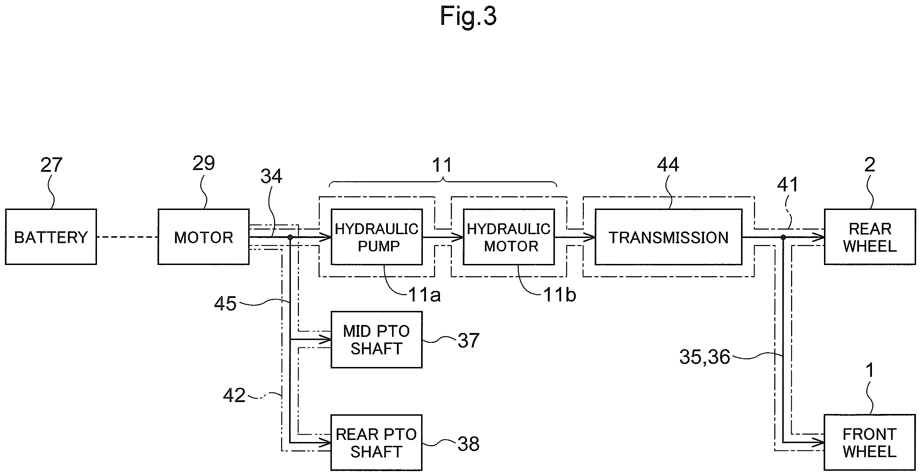

As shown in FIGS. 2 and 3, the motive power supplied from the motor 29 is transmitted to the front wheels 1 and the rear wheels 2 via a travel transmission system 41. The travel transmission system 41 includes the motor 29, the propeller shaft 34 (input shaft), the continuously variable transmission 11, a transmission 44 mounted in the transmission case 12, a transmission shaft 35, a transmission shaft 36, and the like.

The tractor includes a mid PTO shaft 37 (corresponding to a work power output portion) and a rear PTO shaft 38 (corresponding to a work power output portion). The mid PTO shaft 37 outputs motive power to the mower 24, and the mower 24 is attachable to and detachable from the mid PTO shaft 37. The rear PTO shaft 38 outputs motive power to the working device, and the working device is attachable to and detachable from the rear PTO shaft 38, the top link 13, and the lower links 14. The motive power supplied from the motor 29 is transmitted to the mid PTO shaft 37 and the rear PTO shaft 38 via a work transmission system 42. The work transmission system 42 includes the motor 29, a propeller shaft 34, a work transmission shaft 45, and the like.

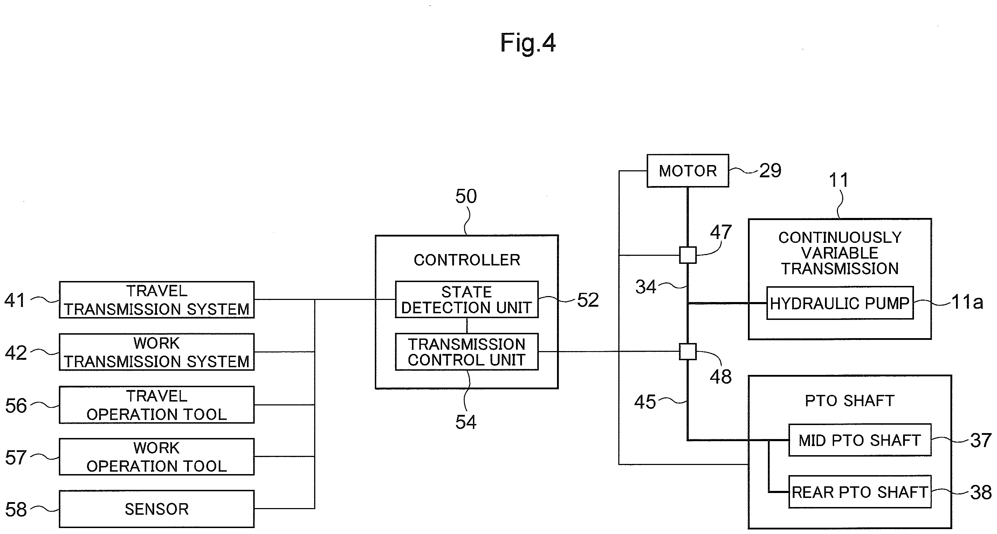

The motive power of the motor 29 is transmitted to the continuously variable transmission 11 via the propeller shaft 34. The continuously variable transmission 11 has a hydraulic pump 11a and a hydraulic motor 11b. The continuously variable transmission 11 changes a speed of the motive power input to the hydraulic pump 11a and outputs the resulting motive power from the hydraulic motor 11b. The propeller shaft 34 rotates in response to the motive power of the mower 24. The motive power of the mower 24 is transmitted to the hydraulic pump 11a as the rotational motive power of the propeller shaft 34 (input shaft). The continuously variable transmission 11 is of a hydrostatic type and is capable of continuously changing the speed on the forward and reverse traveling sides. The worker can operate the continuously variable transmission 11 via a travel operation tool 56 (see FIG. 4) provided in the driving section 5.

The motive power subjected to speed change by the continuously variable transmission 11 is transmitted to the rear wheels 2 via the transmission 44 (auxiliary transmission) provided inside the transmission case 12 and a rear wheel differential device (not shown). The motive power branches just before the rear wheel differential device, and the branched motive power is transmitted via the transmission shaft 35 and the transmission shaft 36 to a front wheel differential device (not shown) provided inside the front axle case 8, and is then transmitted from the front wheel differential device to the front wheels 1.

The mid PTO shaft 37 is provided at a lower part of the front portion of the transmission case 12 and faces frontward, and the rear PTO shaft 38 is provided at a rear portion of the transmission case 12 and faces rearward. Regarding the motive power transmitted by the propeller shaft 34, the motive power that is not subjected to speed change by the continuously variable transmission 11 is transmitted to the mid PTO shaft 37 and the rear PTO shaft 38 (hereinafter referred to simply as PTO shafts) via the work transmission shaft 45 branching off from the propeller shaft 34.

### Power Conservation Control

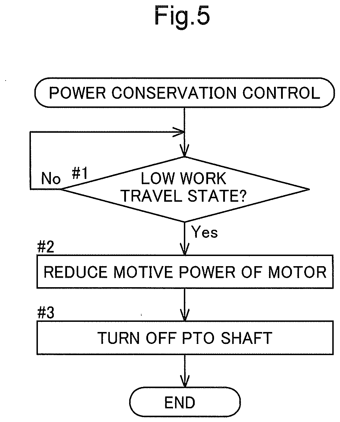

Next, power conservation control will be described using FIGS. 4 and 5, with reference to FIG. 3. The motor 29 of the electric tractor increases the output (rotation speed) according to the traveling speed, and maintains a predetermined output (rotation speed) even when the tractor is not traveling. Power conservation control is control that optimizes the amount of electric power consumed by the motor 29 according to the states of work travel, and reduces the electric power consumed by the motor 29 according to the need for motive power for work travel.

The tractor (electric work vehicle) includes a controller 50, which executes power conservation control. The controller 50 includes a processor such as a CPU and is controlled by the processor. The controller 50 may also be built into the ECU of the tractor, or may be mounted in the tractor separately from the ECU. The controller 50 includes a state detection unit 52 and a transmission control unit 54.
The controller 50 may further include a storage unit and the like as necessary.

The state detection unit 52 detects at least one of the travel state and the work state, and detects whether or not work travel is in a predetermined low work travel state. For example, the state detection unit 52 detects a state in which the body 3 is stopped during work travel as a low work travel state.

Specifically, the state detection unit 52 detects whether the continuously variable transmission 11 is in a neutral position or not, and if the continuously variable transmission 11 is in a neutral position, the state detection unit 52 determines that the body 3 is stopped, which is an example of a low work travel state.

The transmission control unit 54 controls the transmission states of the travel transmission system 41 and the work transmission system 42. As power conservation control, the transmission control unit 54 reduces the electric power consumed by the motor 29 in response to the state detection unit 52 detecting that the work travel is in a predetermined low work travel state. For example, the transmission control unit 54 reduces the motive power generated by the motor 29 in order to reduce the electric power consumed by the motor 29 as power conservation control.

Specifically, first, the transmission control unit 54 determines whether or not the state detection unit 52 has detected a low work travel state (step #1 in FIG. 5). In response to the state detection unit 52 determining that a low work travel state has been detected (step #1 Yes in FIG. 5), the transmission control unit 54 controls the motor 29 to directly reduce the output (rotation speed) of the motor 29 and reduce the transmitted motive power (step #2 in FIG. 5). As a result, in a state where travel has stopped and there is a high likelihood that no work travel is being performed, the output (rotation speed) of the motor 29 is reduced, thereby reducing the electric power consumed by the motor 29. As a result, a case is suppressed in which the motor 29 operates more than necessary and consumes more electric power (energy) than necessary, and thus the efficiency of electric power consumption can be improved. By improving the efficiency of electric power consumption, the tractor can extend the working time (working distance) and the traveling time (traveling distance).

Next, in the power conservation control, upon the elapse of a predetermined first time period after the output (rotation speed) of the motor 29 is reduced, the transmission control unit 54 stops the transmission of motive power by the work transmission system 42. For example, the transmission control unit 54 stops the output of motive power from the PTO shaft (step #3 in FIG. 5). At this time, a clutch 48 may be provided on the work transmission shaft 45, and the transmission control unit 54 may control the clutch 48 to stop the rotation (transmission of motive power) of the work transmission shaft 45 and stop the output of motive power from the PTO shaft. Also, the transmission control unit 54 may stop the motor 29, thereby stopping the transmission of motive power by the work transmission system 42.

In a state where travel has stopped and it is highly likely that work travel is not being performed, the transmission of motive power by the work transmission system 42 is stopped, whereby motive power is not transmitted to the working device, and therefore the output of the motor 29 can be reduced. As a result, the electric power consumed by the motor 29 can be reduced, and the electric power consumption efficiency can be improved. In particular, by stopping the motor 29, the electric power consumed by the motor 29 can be substantially eliminated, and therefore the electric power consumption can be significantly reduced.

Also, by stopping the motor 29 or stopping the transmission of motive power by the work transmission system 42 after a predetermined first time period has elapsed after the output (rotation speed) of the motor 29 is reduced, the worker can recognize beforehand that the motor 29 will stop or the output of motive power from the PTO shaft will stop. For this reason, during the first time period, the worker can select whether to continue the power conservation control or to stop the power conservation control and continue the work. As a result, it is possible to suppress the electric power consumption of the motor 29 as necessary, while at the same time allowing the work to continue when the work is to be performed with the travel stopped. For this reason, it is preferable that the first time period is set in advance as the time period required for the worker to consider whether or not it is necessary to continue the work and to take a predetermined action.

### Alternative Embodiments of First Embodiment

(1) In the above embodiment, in response to the state detection unit 52 determining that a low work travel state has been detected, the transmission control unit 54 may also stop the output of motive power from the PTO shaft (stop the rotation of the work transmission shaft 45) without reducing the output (rotation speed) of the motor 29.
   This makes it possible to quickly reduce the electric power consumed by the motor 29, thereby improving the electric power consumption efficiency.
(2) In each of the above embodiments, the low work travel state may also be a state in which the transmission of motive power to the traveling device (at least one of the front wheels 1 and the rear wheels 2) in the travel transmission system 41 is stopped. That is, the low work travel state may be a state in which motive power is not being transmitted to at least one of the transmission shaft 35 and the transmission shaft 36.
   Also, the low work travel state may be a state in which the continuously variable transmission 11 is at a neutral position. The state in which the continuously variable transmission 11 is at the neutral position may be detected directly by detecting the speed change state of the continuously variable transmission 11, but the state in which the travel operation tool 56 has been operated to a position of operating the continuously variable transmission 11 to the neutral position may also be detected by a potentiometer or the like that detects the operation position of the travel operation tool 56.
   The working devices such as the front loader 17 and the mower 24, which are mounted on the electric work vehicle, are operated by a work operation tool 57 provided in the driving section 5. The low work travel state may also be a state in which no work has been performed by the working device for a predetermined second time period or longer. For example, the low work travel state may be a state in which the work operation tool 57 has not been operated for a predetermined second time period or longer. Note that the second time period is set as appropriate in advance.
   As described above, by detecting a low work travel state using a method appropriate for the work travel, a low work travel state that affects electric power consumption can be detected with high accuracy. As a result, the electric power consumed by the motor 29 can be suppressed with high precision, and the electric power consumption efficiency can be improved.
(3) In the above embodiment, instead of reducing the output (rotation speed) of the motor 29, the transmission control unit 54 may reduce the rotation speed of the propeller shaft 34. That is, a gear shift device 47 consisting of gears and the like is provided on the propeller shaft 34. The transmission control unit 54 may then control the gear shift device 47 as power conservation control to reduce the rotation speed of the propeller shaft 34, thereby reducing the motive power transmitted from the motor 29. It is difficult to efficiently transmit motive power from the hydraulic pump 11a to the hydraulic motor 11b. By reducing the rotation speed of the propeller shaft 34 that transmits motive power to the hydraulic pump 11a, the efficiency of motive power transmission from the hydraulic pump 11a to the hydraulic motor 11b can be improved, and the amount of electric power consumption can be reduced.
(4) Even when travel is not being performed, work may be performed while the body 3 is stopped. In such a case, it is appropriate to maintain the motive power generated by the motor 29 and the electric power consumed by the motor 29 even in a low work travel state.
   For this reason, in each of the above embodiments, the transmission control unit 54 may stop performing power conservation control in a state where work is performed while the body 3 is stopped.
   Specifically, the PTO shaft is provided with a sensor 58 that detects whether or not a working device is attached, or whether or not the attached working device is a working device that may perform work while the body 3 is stopped. Then, in response to the sensor 58 detecting that a working device is attached, or in response to the sensor 58 detecting that the attached working device is a working device that may perform work while the body 3 is stopped, the transmission control unit 54 stops performing power conservation control.
   As a result, even in a low work travel state, if work is performed while the body 3 is stopped, the motive power generated by the motor 29 can be maintained and work can be continued.
(5) In each of the above embodiments, the controller 50 is not limited to including the above-mentioned functional blocks, and may include any functional blocks. For example, each functional block of the controller 50 may be further subdivided, or conversely, some or all of the functional blocks may be combined. Also, the functions of the controller 50 may be realized by a method executed by any functional block, without being limited to the above-mentioned functional blocks. Also, some or all of the functions of the controller 50 may be configured by software. The software program is stored in any storage device and executed by a processor such as a CPU included in the controller 50 or a processor provided separately.
(6) In each of the above embodiments, the tractor does not need to include the front loader 17. Also, the tractor does not need to include the mower 24. That is, the tractor can be configured such that any working device is attachable thereto and detachable therefrom. Furthermore, the tractor may be configured without either the mid PTO shaft 37 or the rear PTO shaft 38.
(7) In each of the above embodiments, the tractor is not limited to a configuration in which the traveling device and the working device are driven by one motor 29, and the tractor may include a traveling motor that drives the traveling device and a working motor that drives the working device.
   In this case, the transmission control unit 54 reduces the motive power generated by at least one of the traveling motor and the working motor during power conservation control.
(8) In each of the above embodiments, the present invention is not limited to a tractor (work vehicle) driven by a motor 29 powered by a battery 27, but may also be applied to a work vehicle driven by any prime mover, such as an engine powered by fuel.
(9) The present invention can be applied not only to a tractor but also to a work vehicle that performs any type of work, such as agricultural work or civil engineering work.

### Second Embodiment

The following conservation control may be executed instead of or in addition to the above-mentioned "Power Conservation Control".

Generally, a tractor is charged at a predetermined location (resupplying location) that includes a power source, such as a warehouse. If the electric power stored in the battery 27 (corresponding to an energy storage unit) runs out during work, the tractor cannot move to a resupplying location and charging cannot be performed. Also, in response to the working device being operated, the output of the working device being increased, or the traveling speed being increased, the rotation speed (output) of the motor 29 increases, and the amount of electric power consumed increases. Furthermore, as the rotation speed of the motor 29 increases, the rotation speed of the hydraulic pump 11a also increases, as a result of which the efficiency of motive power transmission from the hydraulic pump 11a to the hydraulic motor 11b deteriorates and the efficiency of electric power consumption also deteriorates. For this reason, if the working device is operated or the traveling speed is increased while the remaining amount of electric power stored in the battery 27 (remaining amount of the battery 27) is low, the travelable distance may be insufficient and it may become impossible to move to the resupplying location.

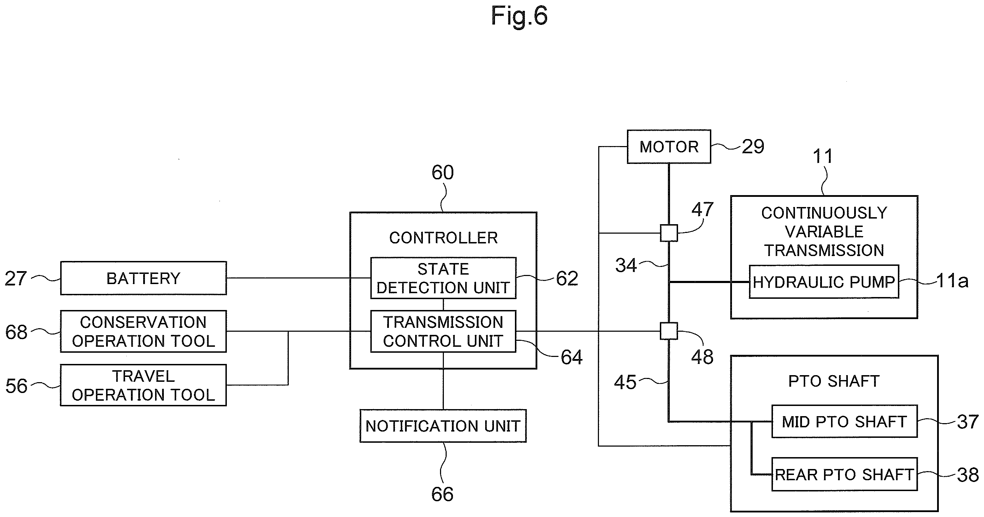

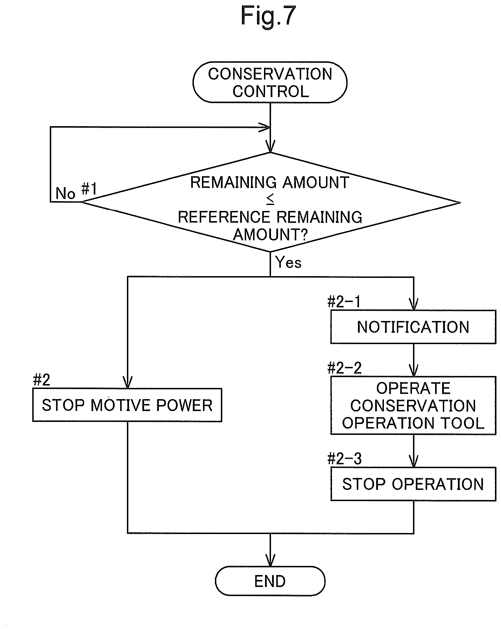

For this reason, in response to the remaining amount of the battery 27 becoming low, it is preferable to perform conservation control to extend the travelable distance of the tractor. Hereinafter, the conservation control will be described using FIGS. 6 and 7, with reference to FIG. 3.

The tractor (work vehicle) includes a controller 60, which executes conservation control. The controller 60 includes a processor such as a CPU and is controlled by the processor. The controller 60 may be built into the ECU of the tractor, or may be mounted in the tractor separately from the ECU. Also, the controller 60 may be a vehicle control unit (VCU) that controls the vehicle. The controller 60 includes a remaining amount detection unit 62 and a transmission control unit 64.
The controller 60 may further include a storage unit and the like as necessary.

The remaining amount detection unit 62 detects the remaining amount of the electric power stored in the battery 27 (the remaining amount of the battery 27). In particular, the remaining amount detection unit 62 detects whether or not the remaining amount of the battery 27 is less than or equal to a predetermined reference remaining amount. The reference remaining amount is determined in advance based on the amount of electric power required to travel to a resupplying location. For example, the reference remaining amount can be determined based on the distance from the location where work is being performed to the resupplying location, and may be set as the average amount of electric power considered to be required to move to the resupplying location.

The transmission control unit 64 controls the transmission states of the travel transmission system 41 and the work transmission system 42. In conservation control, in response to the remaining amount detection unit 62 detecting that the remaining amount of the battery 27 is less than or equal to the predetermined reference remaining amount, the transmission control unit 64 stops the output of motive power from the PTO shafts (the mid PTO shaft 37 and the rear PTO shaft 38, which correspond to the work power output portions). For example, the transmission control unit 64 stops the transmission of electric power by the work transmission system 42 in order to stop the output of motive power from the PTO shaft as conservation control.

Specifically, first, the transmission control unit 64 determines whether or not the remaining amount detection unit 62 has detected that the remaining amount of the battery 27 is less than or equal to a predetermined reference remaining amount (step #1 in FIG. 7). In response to the remaining amount detection unit 62 determining that the remaining amount of the battery 27 is less than or equal to a predetermined reference remaining amount (step #1 Yes in FIG. 7), the transmission control unit 64 stops the transmission of motive power by the work transmission system 42 and stops the output of motive power from the PTO shaft (step #2 in FIG. 5).

For this reason, a clutch 48 is provided on the work transmission shaft 45, and the transmission control unit 64 controls the clutch 48 to stop the rotation (motive power transmission) of the work transmission shaft 45 and stop the output of motive power from the PTO shaft.

In this way, by stopping the output of motive power from the PTO shaft, the motive power that needs to be supplied from the motor 29 is reduced and the amount of electric power consumed by the motor 29 can be reduced. That is, by stopping the PTO shaft, the loss of motive power output from the motor 29 is reduced, and the amount of electric power consumed by the motor 29 can be reduced. For this reason, the consumption of electric power of the battery 27 is conserved, and it is easier to ensure the electric power required for travel. As a result, the travelable distance (travelable time) is extended, and the possibility of the tractor moving to the resupplying location is improved.

### Alternative Embodiments of Second Embodiment

(1) The conservation control is not limited to a configuration in which the output of motive power from the PTO shaft is stopped, and may also be a configuration in which the motive power input from the motor 29 to the hydraulic pump 11a of the continuously variable transmission 11 is reduced.
   For example, the transmission control unit 64 reduces the rotation speed of the propeller shaft 34, thereby reducing the motive power input to the hydraulic pump 11a. For this reason, a gear shift device 47 consisting of gears and the like is provided on the propeller shaft 34. Then, in conservation control, the transmission control unit 64 controls the gear shift device 47 to reduce the rotation speed of the propeller shaft 34, thereby reducing the motive power input to the hydraulic pump 11a.
   Since the motive power (rotation speed) input to the hydraulic pump 11a is reduced, the transmission loss of the motive power transmitted from the hydraulic pump 11a to the hydraulic motor 11b is reduced. For this reason, the continuously variable transmission 11 operates efficiently, and the motor 29 operates efficiently. As a result, consumption of electric power from the battery 27 is conserved, and thus it is easier to ensure the electric power required for travel, the traveling distance (traveling time) can be extended, and the possibility that the tractor will be able to move to the resupplying location can be improved.
(2) In each of the above embodiments, in response to the transmission control unit 64 performing conservation control, notification of the fact that conservation control is to be performed may be issued. For this reason, the tractor includes a notification unit 66 that issues a predetermined notification.

In response to the remaining amount detection unit 62 detecting that the remaining amount of the battery 27 is less than or equal to a predetermined reference remaining amount, the transmission control unit 64 first causes the notification unit 66 to issue a notification indicating that conservation control is to be performed. After the notification is issued, the transmission control unit 64 executes conservation control.

This allows the worker to recognize that conservation control will be performed by being notified in advance when conservation control is to be performed. This makes it easier for the worker to take an appropriate action as necessary. For example, if it is necessary to continue working or to travel at a high speed, the worker can take an action to stop conservation control after the notification and before conservation control is performed.

Furthermore, the conservation control may be executed in response to operation of the work vehicle after the notification.
For this reason, the tractor includes a conservation operation tool 68 that receives an operation indicating whether or not execution of conservation control is needed.

In this case, first, in response to the remaining amount detection unit 62 detecting that the remaining amount of the battery 27 is less than or equal to a predetermined reference remaining amount (step #1 in FIG. 7), the transmission control unit 64 causes the notification unit 66 to issue a notification indicating that conservation control will be performed (step #2-1 in FIG. 7).

This notification allows the worker to recognize that conservation control is to be executed. Upon recognizing that conservation control is to be executed, the worker determines whether or not conservation control should be executed, taking into consideration the state of work travel and the like. If the worker determines that conservation control should be performed, the worker operates the conservation operation tool 68 to request execution of conservation control (step #2-2 in FIG. 7).

In response to the conservation operation tool 68 being operated, the transmission control unit 64 controls the motor 29 to stop the transmission of motive power by the work transmission system 42, thereby stopping the output of motive power from the PTO shaft (step #2-3 in FIG. 7).

In this way, the transmission control unit 64 executes conservation control only after receiving an operation for requesting execution of the conservation control on the conservation operation tool 68, after having issued a notification indicating that the conservation control is to be performed. For this reason, since conservation control is executed only when necessary depending on the states of the work travel and the like, it is easier to ensure the motive power required for work travel while conserving the electric power of the battery 27.

(3) In each of the above embodiments, the controller 60 is not limited to including the above-mentioned functional blocks, and may include any functional blocks. For example, each functional block of the controller 60 may be further subdivided, and conversely, some or all of the functional blocks may be combined. Also, the functions of the controller 60 may be realized by a method executed by any functional block, without being limited to the above-mentioned functional blocks. Also, some or all of the functions of the controller 60 may be configured by software. The software program is stored in any storage device and executed by a processor such as a CPU included in the controller 60 or a processor provided separately.

(4) In each of the above embodiments, the tractor does not need to include the front loader 17. Also, the tractor does not need to include the mower 24. That is, the tractor can be configured such that any working device is attachable thereto and detachable therefrom. Furthermore, the tractor may be configured without either the mid PTO shaft 37 or the rear PTO shaft 38.

(5) In each of the above embodiments, the tractor is not limited to a configuration in which the traveling device and the working device are driven by one motor 29, and the tractor may also include a traveling motor that drives the traveling device and a working motor that drives the working device. In this case, the transmission control unit 64 may stop the working motor in the conservation control, instead of stopping the transmission of motive power by the work transmission system 42 (output of motive power from the PTO shaft).

(6) In each of the above embodiments, the present invention is not limited to a tractor (work vehicle) driven by a motor 29 powered by a battery 27, but may be applied to a work vehicle driven by any prime mover, such as an engine powered by fuel. In this case, the tractor is provided with a tank for storing fuel, which is energy, as an energy storage unit. By executing the conservation control, the amount of fuel (energy) consumed is suppressed, and the possibility of moving to a fuel resupplying location is improved.

(7) The present invention can be applied not only to tractors but also to work vehicles that perform any type of work, such as agricultural work or civil engineering work.

### Reference Signs List

- 1: Front wheel (traveling device)
- 2: Rear wheel (traveling device)
- 11: Continuously variable transmission
- 11a: Hydraulic pump
- 11b: Hydraulic motor
- 17: Front loader (working device)
- 24: Mower (working device)
- 27: Battery
- 29: Motor
- 34: Propeller shaft (input shaft)
- 37: Mid PTO shaft (work power output portion)
- 38: Rear PTO shaft (work power output portion)
- 41: Travel transmission system
- 42: Work transmission system
- 47: Gear shift device
- 52: State detection unit
- 54: Transmission control unit
- 56: Travel operation tool
- 57: Work operation tool
- 58: Sensor
- 62: Remaining amount detection unit
- 64: Transmission control unit
- 66: Notification unit
- 68: Conservation operation tool

## Claims

1. An electric work vehicle comprising:
a battery (27);
a motor (29) configured to generate motive power by receiving supply of electric power from the battery;
a traveling device (1,2) configured to operate by the motive power;
a work power output portion configured to output the motive power to be supplied to a working device (17,24) configured to perform work;
a travel transmission system (41) configured to transmit the motive power from the motor to the traveling device;
a work transmission system (42) configured to transmit the motive power from the motor to the work power output portion;
a state detection unit (52) configured to detect a state of work travel; and
a transmission control unit (54) configured to control transmission states of the travel transmission system and the work transmission system,
wherein in response to the state detection unit detecting that the work travel is in a predetermined low work travel state, the transmission control unit performs power conservation control for reducing the electric power consumed by the motor.

2. The electric work vehicle according to claim 1,
wherein in the power conservation control, the transmission control unit (54) reduces the motive power generated by the motor (29).

3. The electric work vehicle according to claim 2,
wherein the motive power generated by the motor (29) is output via a propeller shaft (34) configured to rotate according to the motive power, and
in the power conservation control, the transmission control unit (54) reduces a rotation speed of the propeller shaft.

4. The electric work vehicle according to any one of claims 1 to 3,
wherein the transmission control unit (54) stops transmission of the motive power by the work transmission system (42) upon elapse of a predetermined first time period after the motive power is reduced.

5. The electric work vehicle according to any one of claims 1 to 4,
wherein in the power conservation control, the transmission control unit (54) stops transmission of the motive power by the work transmission system.

6. The electric work vehicle according to claim 4 or 5,
wherein the transmission control unit (54) stops transmission of the motive power by the work transmission system (42) by stopping output of the motive power from the work power output portion.

7. The electric work vehicle according to any one of claims 1 to 6,
wherein the low work travel state is a state in which transmission of the motive power to the traveling device (1,2) in the travel transmission system (41) is stopped.

8. The electric work vehicle according to any one of claims 1 to 6,
wherein the travel transmission system (41) includes a continuously variable transmission configured to change a speed of the motive power,
the electric work vehicle further comprises a travel operation tool (56) configured to receive an operation on the continuously variable transmission, and
the low work travel state is a state in which the travel operation tool (56) has been operated to a position of operating the continuously variable transmission to a neutral position.

9. The electric work vehicle according to any one of claims 1 to 6,
wherein the travel transmission system (41) includes a continuously variable transmission configured to change a speed of the motive power, and
the low work travel state is a state in which the continuously variable transmission is at a neutral position.

10. The electric work vehicle according to any one of claims 1 to 6, further comprising
a work operation tool (57) configured to receive an operation on the working device,
wherein the low work travel state is a state in which the work operation tool has not been operated for a predetermined second time period or longer.

11. The electric work vehicle according to any one of claims 1 to 10,
wherein the working device (24) is attachable to and detachable from the work power output portion,
the electric work vehicle further comprises a sensor (58) configured to detect whether or not the working device is attached to the work power output portion, and
the transmission control unit (54) stops the power conservation control in response to the sensor detecting that the working device is attached to the work power output portion.

12. The electric work vehicle according to any one of claims 2 to 11,
wherein the motor (29) includes a traveling motor configured to drive the traveling device and a working motor configured to drive the working device, and
the transmission control unit (54) reduces the motive power generated by at least one of the traveling motor and the working motor.

13. A work vehicle comprising:
an energy storage portion (27) configured to store energy;
a prime mover (29) configured to generate motive power by receiving supply of the energy;
a traveling device (1,2) configured to operate by the motive power;
a work power output portion (37,38) configured to output the motive power to be supplied to a working device (17,24) configured to perform work;
a travel transmission system (41) configured to transmit the motive power from the prime mover to the traveling device;
a work transmission system (42) configured to transmit the motive power from the prime mover to the work power output portion;
a remaining amount detection unit (62) configured to detect a remaining amount of the energy stored in the energy storage unit; and
a transmission control unit (64) configured to control transmission states of the travel transmission system and the work transmission system,
wherein the transmission control unit (64) performs conservation control for stopping output of the motive power from the work power output portion in response to the remaining amount detection unit (62) detecting that the remaining amount is less than or equal to a predetermined reference remaining amount.

14. The work vehicle according to claim 13,
wherein the transmission control unit (64) stops output of the motive power from the work power output portion by stopping transmission of the motive power by the work transmission system.

15. A work vehicle comprising:
an energy storage portion (27) configured to store energy;
a prime mover (29) configured to generate motive power by receiving supply of the energy;
a traveling device (1,2) configured to operate by the motive power;
a work power output portion (37,38) configured to output the motive power to be supplied to a working device (17,24) configured to perform work;
a travel transmission system (41) configured to transmit the motive power from the prime mover to the traveling device;
a work transmission system (42) configured to transmit the motive power from the prime mover to the work power output portion;
a remaining amount detection unit (62) configured to detect a remaining amount of the energy stored in the energy storage unit; and
a transmission control unit (64) configured to control transmission states of the travel transmission system and the work transmission system,
wherein the travel transmission system includes a continuously variable transmission configured to change a speed of the motive power input to a hydraulic pump (11a) and output the resulting motive power from a hydraulic motor (11b), and
the transmission control unit (64) performs conservation control for reducing the motive power input to the hydraulic pump in response to the remaining amount detection unit detecting that the remaining amount is less than or equal to a predetermined reference remaining amount.

16. The work vehicle according to claim 15,
wherein the motive power is transmitted to the hydraulic pump (11a) as rotational motive power of a propeller shaft (34),
the propeller shaft includes a gear shift device (47), and
the transmission control unit (64) reduces the motive power input to the hydraulic pump by reducing a rotation speed of the propeller shaft using the gear shift device.

17. The work vehicle according to any one of claims 13 to 16, further comprising
a notification unit (66) configured to issue a predetermined notification,
wherein in response to performing the conservation control, the transmission control unit (64) causes the notification unit to issue a notification indicating that the conservation control is to be performed.

18. The work vehicle according to claim 17, further comprising
a conservation operation tool (68) configured to receive an operation indicating whether or not execution of the conservation control is needed,
wherein the transmission control unit (64) executes the conservation control in response to receiving an operation requesting execution of the conservation control on the conservation operation tool after the notification indicating that the conservation control is to be performed is issued.

19. The work vehicle according to any one of claims 13 to 18,
wherein the prime mover is a motor (29), the energy is electric power, and the energy storage unit is a battery (27).

20. The work vehicle according to any one of claims 13 to 18,
wherein the prime mover is an engine and the energy is fuel.
